# FASCICULE DE BREVET EUROPEEN

(11) **EP 2 943 960 B1**
(45) Date de publication et mention de la délivrance du brevet: **01.03.2017**
(21) Numéro de dépôt: 13818328.0
(22) Date de dépôt: 17.12.2013
(51) Int. Cl.: G21F 9/30, B01D 59/00, G21F 9/06, G21F 9/08

(54) **INSTALLATION DE TRAITEMENT DE DÉCHETS RADIOACTIFS CARBONES, NOTAMMENT DE GRAPHITE**
ANLAGE ZUR VERARBEITUNG VON KOHLENSTOFFHALTIGEM RADIOAKTIVEM ABFALL, INSBESONDERE GRAPHIT
FACILITY FOR PROCESSING CARBONACEOUS RADIOACTIVE WASTE, IN PARTICULAR GRAPHITE

(30) Priorité: 09.01.2013 FR 1350165
(43) Date de publication de la demande: 18.11.2015
(73) Titulaire: Electricité de France, 75008 Paris (FR)
(72) Inventeur: LAURENT, Gérard, F-69100 Villeurbanne (FR)
(74) Mandataire: Cabinet Plasseraud
(86) Numéro de dépôt international: PCT/FR2013/053119
(87) Numéro de publication internationale: WO 2014/108614

(56) Documents cités:
- EP-A1- 1 927 997
- WO-A2-01/27935
- FR-A1- 2 943 167
- US-A- 5 909 654

## Description

L'invention concerne le traitement de déchets radioactifs, issus de l'exploitation de centrales nucléaires.

Elle concerne plus particulièrement le traitement de déchets carbonés, notamment de graphite utilisé en tant que matériau absorbant les neutrons dans des chemises autour d'un réacteur.

Le graphite peut être traité par combustion et/ou par réformage à la vapeur (traitement appelé ci-après « vaporéformage », pour « steam reforming » en anglais). Il est proposé plus globalement ici un traitement depuis l'extraction du graphite irradié en réacteur jusqu'au traitement des gaz émis (par combustion ou vaporéformage du graphite), tout en prévoyant des traitements nécessaires au conditionnement des déchets secondaires induits par le traitement global.

Le choix du média pour le transport du graphite vers les réacteurs de traitement du graphite est un point important à ce stade car le média porteur détermine les paramètres qui doivent être adaptés pour le traitement ultérieur des effluents collectés (typiquement le chlore 36 (CI36), le carbone 14 (C14) et le tritium (H3) concentrés), en vue de leur minéralisation ou leur piégeage ultérieur afin de limiter, autant que possible, les rejets dans l'environnement.

Le traitement du graphite en tant que tel est conforme, dans un mode de réalisation possible, au procédé décrit dans le document FR-2943167, qui présente en outre la collecte des effluents et leur traitement.

Toutefois, il reste à déterminer le meilleur média possible pour le transport du graphite.

La présente invention vient améliorer la situation.

Elle propose à cet effet un procédé de traitement de déchets radioactifs carbonés, comportant un acheminement des déchets jusqu'à un ou plusieurs postes de séparation d'isotopes radioactifs, parmi au moins du carbone 14, du chlore 36, et du tritium.

Selon une caractéristique de l'invention, l'acheminement est effectué par voie humide vers chacun des postes.

Ainsi, il s'avère, selon les études et essais de la Demanderesse, que l'eau se présente comme un élément de choix en tant que vecteur pour acheminer les déchets depuis l'entrée d'une installation de traitement des déchets jusqu'aux postes de séparation des isotopes radioactifs, voire jusqu'à leur conditionnement (par exemple le conditionnement du C14) selon des modes de réalisation présentés ultérieurement dans la description détaillée.

Dans une réalisation, on prévoit des postes de séparation spécifiques pour chaque élément parmi le carbone 14, le chlore 36, et le tritium, et un acheminement par voie humide vers chacun de ces postes.

Ainsi, ce mode de réalisation propose une séparation bien marquée pour la récupération du chlore 36, d'une part, et du tritium, d'autre part, et ce, grâce à un acheminement en voie humide.

Dans une réalisation pratique, les déchets sont broyés et acheminés en étant mélangés à de l'eau sous forme de boue, avant une première séparation isotopique, par exemple celle du chlore 36.

Selon l'invention, les déchets sont mélangés à de l'eau sous forme de boue, puis filtrés mécaniquement et séchés. Le séchage est préférentiellement réalisé par augmentation de température douce (inférieure à 1000°C) pour ne pas libérer de radionucléides autres que le chlore 36 (les autres radionucléides H3, C14 étant libérés à des étapes ultérieures). L'eau issue de ce séchage comporte alors tout ou partie du chlore 36 qui était initialement présent dans les déchets avant séchage.

Dans un mode de réalisation, la séparation du tritium intervient en effet après la séparation du chlore 36. Les déchets sont calcinés par grillage, puis lavés. L'eau récupérée du lavage comporte alors tout ou partie du tritium initialement présent dans les déchets avant grillage.

Dans un mode de réalisation, les séparations du chlore 36 et du tritium précèdent le traitement du carbone 14, le chlore 36 et le tritium étant séparés du reste des déchets carbonés préférentiellement par lixiviation.

Dans une réalisation où une partie au moins des déchets est calcinée par grillage, les déchets résultant du grillage sont oxydés sous forme de dioxyde de carbone pour être dissous dans de l'eau d'acheminement.

Dans une forme de réalisation, le carbone 14, mis sous forme de dioxyde de carbone, peut alors être traité ensuite par réaction de carbonatation pour solidification et stockage sous forme solide.

Les déchets carbonés peuvent comporter initialement du graphite. Néanmoins, la présente invention s'applique à d'autres types de déchets carbonés tels que les résines par exemple.

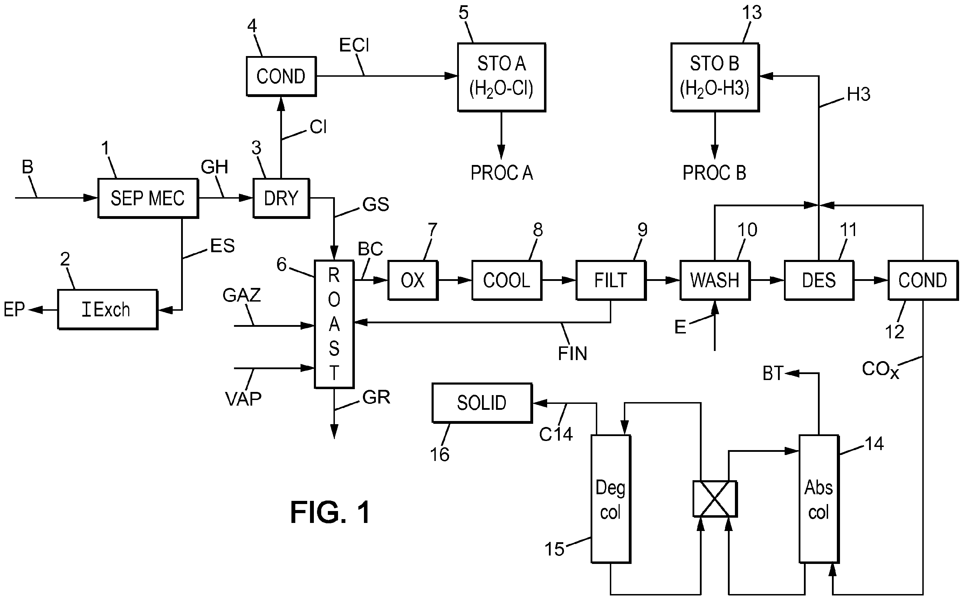

La présente invention vise aussi une installation de traitement de déchets radioactifs carbonés selon la revendication 10 (une forme de réalisation est illustrée sur la figure 1 commentée ci-après), l'installation comportant un ou plusieurs postes de séparation d'isotopes radioactifs, parmi au moins du carbone 14, du chlore 36, et du tritium, ainsi que des moyens d'acheminement des déchets jusqu'auxdits postes.

Selon une caractéristique de l'invention, les moyens d'acheminement sont alimentés en eau, pour un acheminement des déchets par voie humide.

Ainsi, l'installation de traitement comporte par exemple des alimentations d'appoint en eau (comme la référence E de la figure 1, ou une alimentation pour transformation en boue B, comme décrit plus loin).

D'autres avantages et caractéristiques de l'invention apparaitront à la lecture de la description détaillée d'exemples de réalisation ci-après et à l'examen des dessins annexés sur lesquels :
- la figure 1 représente un exemple de postes d'une installation de traitement de déchets radioactifs carbonés, au sens de l'invention,
- la figure 2 résume les étapes de traitement des déchets que mène l'installation,
- les figures 3A et 3B comparent la solubilité dans l'eau respectivement du monoxyde et du dioxyde de carbone.

Selon les essais initiés, trois possibilités peuvent être envisagées pour un média de collecte des déchets carbonés:
- un transfert en eau,
- un transfert en milieu gazeux en phase diluée,
- un transfert en milieu gazeux et en phase dense.

Le tableau ci-après résume les avantages et inconvénients liés à chaque technique.

| | **Eau** (barbotine aqueuse composée de graphite dans de l'eau) | **Pneumatique** **Phase diluée** (utilisant de l'azote comme gaz porteur) | **Pneumatique** **Phase dense** (utilisant de l'azote comme gaz porteur) |
|---|---|---|---|
| **Conception** | Simple | Plus simple | Plus complexe |
| **Fiabilité et contrôle** | Simple | Facile | Plus complexe |
| **Coût d'investissement** | Faible | Faible, mais peut augmenter en raison de la nécessité d'une installation d'azote (N₂) de grande capacité | Plus élevé qu'en phase diluée |
| **Coût d'exploitation** | Faible | Élevé, du fait de la grande quantité de gaz N₂ requise | Moyen, car moindres quantités de N₂ gazeux |
| **Déchets secondaires** | • Nécessité de traiter le volume d'eaux usées pour transférer le graphite | • Minimal | • Minimal |
| | | • Le transfert d'un produit sec peut éviter de devoir sécher le produit (supprime séchoir et cuve A) | • Le transfert d'un produit sec peut éviter de devoir sécher le produit (supprime séchoir et cuve A) |
| **Sécurité** | • Acceptable | • Fonctionne sous vide | • Pas sûr des conditions de vide |
| | • Fonctionne en pression positive | • L'abrasion des particules de graphite à grande vitesse produit de la poussière | |
| | | | • Peut fonctionner en pression positive |
| | | • Nécessité de contrôles de sécurité à cause de la poussière | |

Dans la dernière ligne du tableau ci-dessus, on entend par « pression positive » une pression supérieure à la pression atmosphérique et par « conditions de vide » une pression inférieure à la pression atmosphérique. Ainsi, le confinement peut nécessiter des précautions constructives dans certaines conditions (ou une barrière de confinement supplémentaire). En effet, en phase pneumatique dense comme en eau, il est préférable de pouvoir pomper le graphite pour son acheminement.

Il résulte de cette étude que le choix du média 'eau' s'impose pour l'ensemble des transferts de déchets carbonés tels que du graphite irradié. Ce média offre les meilleures garanties en termes de confinement et de radioprotection.

Il permet, en outre, une gestion plus aisée des interfaces entre les réacteurs de traitement du graphite.

Selon un autre résultat de l'étude, il s'avère qu'environ 30% (plus largement une gamme possible entre 20 et 40%) en poids de graphite dans l'eau en tant que média de transport est un optimum.

Le schéma d'ensemble d'un traitement global au sens de l'invention est représenté sur la figure 1.

On se réfère tout d'abord à la figure 1 sur laquelle une boue B, de mélange de graphite et d'eau (avec environ 30% de graphite) et résultant d'un broyage en eau, est acheminée vers un poste de séparation mécanique 1 par exemple par filtrage avec centrifugation. En sortie du poste 1, une proportion de 90 % de graphite humide GH est acheminée ensuite vers un sécheur 3, tandis que l'eau salle ES issue du poste de séparation mécanique 1 est amenée vers un filtre isotopique 2, par exemple un échangeur d'ions. L'eau propre EP, ainsi filtrée, peut par exemple être retournée dans un circuit d'alimentation en eau d'une installation de traitement des déchets selon la figure 1.

En sortie du sécheur 3, la vapeur d'eau issue du séchage comporte l'essentiel du chlore 36 (isotope radioactif) qui était présent initialement dans le graphite à traiter. La vapeur d'eau CI comportant cet isotope CI36 est acheminée d'abord vers un condenseur 4 pour se liquéfier en eau ECI, comportant du chlore 36, pour être stockée ensuite dans un réservoir A (au poste 5), en attendant un traitement spécifique du chlore 36.

Par ailleurs, le graphite sec GS issu du sécheur 3 est acheminé vers un poste de traitement thermique 6, par grillage (ou « roasting »). Le traitement de grillage peut être conforme à l'enseignement divulgué dans le document FR 12 60282. A cet effet, on prévoit des injections contrôlées de gaz tels que de l'hydrogène, du monoxyde et du dioxyde de carbone, ainsi que de la vapeur d'eau. On peut appliquer ainsi un premier traitement thermique à haute température (1000-1500°C) avec une injection de vapeur d'eau, suivi d'un deuxième traitement thermique plus doux (800-1200°C) selon la réaction de Boudouard avec une injection contrôlée de CO et/ou CO₂. Un tel traitement thermique libère séquentiellement, tout d'abord, l'isotope C14, puis l'isotope C12, sous forme d'oxydes.

Ainsi, les premières buées BC issues de la calcination au poste 6, comportent essentiellement du carbone 14 (isotope radioactif) qu'il convient de traiter en tant que déchet secondaire. Dans un exemple de réalisation, une oxydation du CO éventuellement présent en sortie du poste 6, est menée au poste 7 pour obtenir préférentiellement du CO₂, plus soluble dans l'eau que le CO, comme on le verra plus loin. En sortie du refroidisseur 8, un filtre 9 récupère les plus petites particules solides (dites « fines ») pour les réinjecter dans le poste de traitement thermique 6. Le résidu issu du filtrage est trempé et lavé avec de l'eau d'appoint E au poste 10 pour récupérer du tritium (isotope H3 de l'hydrogène). On peut prévoir en outre un désembueur 11 et un condenseur 12 pour récupérer l'eau chargée en tritium dans le réservoir de stockage B (poste 13), en attendant un traitement spécifique du tritium H3.

Le gaz résiduel issu du condenseur 12 ne comporte, en majorité, que du monoxyde ou du dioxyde de carbone COₓ. Il peut être acheminé ensuite vers un poste à colonnes d'absorption 14 et de dégazage 15. Les buées résultantes BT sont ainsi traitées et le résidu de ce traitement comporte essentiellement du CO₂ pur, contenant l'essentiel du C14 issu du graphite. Ce dernier peut être traité alors dans un poste 16, par exemple en étant solidifié par réaction de carbonatation (sous forme de CaCO₃).

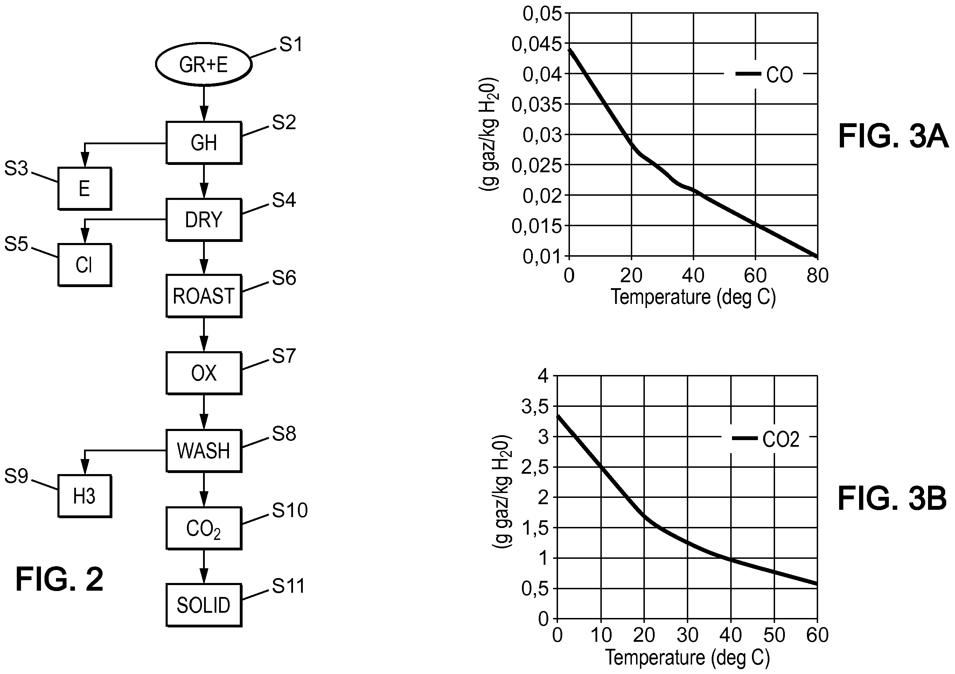

On a résumé sur la figure 2 les principales étapes du traitement, comme suit.

A l'étape S1, une boue de graphite, issue du broyage du graphite sous eau, est obtenue pour être transférée par une canalisation vers une installation comportant notamment une cuve de traitement thermique pour une phase de grillage (ou « roasting »). Afin d'être transportable, cette boue contient environ 30% de graphite, le reste est de l'eau.

L'étape S2 consiste ensuite en une première séparation (par filtrage et/ou centrifugation) du graphite à partir de l'eau contenue dans la boue. Entre 5 et 10 % en masse de l'eau reste avec le graphite à l'issue de cette étape S2.

A l'étape S3, l'eau extraite est filtrée. A cet effet, elle est mécaniquement renvoyée dans un bâtiment réacteur afin d'y être traitée, par exemple par des moyens de filtration d'eau (utilisés habituellement pendant le démantèlement de caissons UNGG). Un autre moyen (référence 2 de la figure 1) peut être une installation autonome de filtres et de résines échangeuses d'ions afin de réaliser cette filtration.

A l'étape S4, le graphite humide est ensuite séché dans un sécheur à haute température (comprise entre 400°C et 600°C) afin d'éliminer l'eau résiduelle. Le graphite doit préférentiellement être sec afin de maitriser parfaitement les conditions d'oxydation lors de la phase de traitement thermique du graphite. La température de séchage est judicieusement choisie afin de sécher le graphite sans libérer trop de radionucléides pendant cette phase. Toutefois, entre 400 et 600°C, une partie du chlore 36 est inévitablement libérée avec la vapeur générée. Elle est collectée dans le réservoir 'A' de la figure 1. La proportion de CI36 libérée peut atteindre ici 90% et celle de H3, 5% pendant cette phase. Le traitement de l'eau contenue dans ce réservoir 'A' peut être réalisé avec des résines échangeuses d'ions afin de capter le CI36 à l'étape S5. Il est possible de mutualiser l'emploi du système de filtration d'eau déjà présent sur le site de démantèlement des éléments internes du réacteur, ou de se doter d'un système de purification par résines dédié. Le tritium peut être entreposé pour le laisser décroitre sur le site dans des réservoirs (ou « baches ») dédiés, ou encore piégé sur des hydrures métalliques, ou encore recyclé pour d'autres usages industriels. Préférentiellement, les résines contenant le chlore 36 sont destinées à un stockage profond.

A l'étape S6, le graphite sec est chargé dans l'installation de calcination. Cette installation de calcination et les gaz qui y sont utilisés sont décrits dans le document FR-12 60282. Il s'agit par exemple d'un traitement thermique par grillage ou « roasting », qui, avantageusement, procure les performances suivantes :
- élimination du chlore 36 qui n'a pas été éliminé pendant le séchage (les 10% restants),
- libération de 95 % du tritium (le reliquat restant) et de carbone 14,
- pour une perte de masse associée de seulement 5 %.

Il convient de noter qu'il peut être prévu ici l'usage de catalyseurs (à base par exemple de métaux spéciaux tels que des métaux nobles de type platine, palladium, etc.) à mixer avec le graphite en poudre afin d'améliorer l'oxydation et de la diligenter, de façon générale, dans les postes de traitement thermique (notamment dans le four de grillage ou « roaster », ici).

L'étape S7 concerne le traitement des buées générées. Elles passent d'abord dans un dispositif d'oxydation catalytique afin de convertir le monoxyde de carbone CO en dioxyde de carbone CO₂. Le flux de buées est ensuite refroidi puis filtré. Les éventuels éléments solides présents dans les buées sont filtrés du flux et sont retournés vers l'installation de calcination.

L'étape S8 concerne la collecte des effluents. Les buées refroidies sont alors trempées et lavées à contre flux. La vapeur qui a été introduite dans l'installation se condense alors. Le tritium et le chlore 36 sont éliminés ici (étape S9). L'eau collectée est transférée vers le réservoir 'B'. Ce réservoir contient alors la majeure partie du tritium et le reliquat de chlore 36 (10% restants après le séchage du graphite). Il contient également une petite quantité de C14 provenant de l'absorption de CO₂ dans l'eau. Une oxydation catalytique du CO est mise en oeuvre préférentiellement ici car le CO₂ a une plus grande solubilité dans l'eau. Le traitement du CI36 et du H3 contenus dans cette bache 'B' est similaire à celui prévu pour le CI36 et le H3 contenus dans la bache 'A' (étape S4 ci-dessus).

Par exemple, le CO₂ à 9,25 10⁻³ TBQ peut être dissous dans 430 m³ d'eau alors que seulement 1,85 10⁻⁴ pour le CO peut être dissous dans la même quantité d'eau (voir les courbes de solubilité des figures 3A et 3B).

La température de ces liquides (majoritairement de l'eau mais aussi un mélange avec de la soude NaOH en faible quantité afin d'améliorer l'élimination du CO₂ décrite ci-après) est voisine de 40°C.

L'élimination du CO₂ contenant l'essentiel du C14 est menée à l'étape S10 dans les buées qui sont issues de la collecte des effluents à l'étape S8. Les buées circulent alors vers un système d'élimination du CO₂ qui est basé par exemple sur une technique d'absorption chimique, utilisant généralement un type d'amine pour capturer le CO₂. La cuve d'absorption fournit un moyen de mettre en contact le gaz et un solvant chimique, généralement une amine organique, qui absorbe la plupart du CO₂ en réagissant pour former un composé lié. Le solvant, riche en CO₂, est ensuite transféré vers une autre cuve (la colonne de dégazage 15 de la figure 1) où il est chauffé avec de la vapeur pour inverser les réactions d'absorption de CO₂. Le CO₂ libéré dans la colonne de dégazage peut être collecté et compressé pour le stockage ou pour former un résidu solide suite à des réactions de minéralisation à l'étape S11 (par exemple pour former du carbonate solide CaCO₃). Des taux de récupération du CO₂ supérieurs à 95% peuvent être obtenus avec des techniques courantes.

Au besoin, des solutions d'absorbants plus sophistiqués pourraient être utilisées pour améliorer ce ratio.

Dans le tableau ci-dessous, il est supposé un rendement de capture de 95%, ce qui signifie qu'une fraction (2,25 TBq par an de C14) quitte le système dans les buées traitées comme décrit plus haut.

On atteint une perte de masse liée au traitement global, qui n'est guère plus élevée que 5%.

Les principaux flux et l'inventaire des radionucléides dans chaque flux qui doivent être solidifiés ou traités en vue de leur élimination sont donnés dans le tableau suivant :

| | T/an | CI-36 TBq/An | H-3 TBq/An | C-14 TBq/An |
|---|---|---|---|---|
| Graphite calciné | 950,00 | 0,00 | 4,75 | 5,00 |
| Réservoir de stockage A - Liquides | 233,33 | 0,45 | 2,50 | 0,00 |
| Réservoir de stockage B - Liquides | 431,50 | 0,05 | 42,75 | 9,25E-03 |
| CO₂ compressé | 3 755,76 | 0,00 | 0,00 | 42,74 |

Les figures 3A et 3B comparent la solubilité dans l'eau du CO à celle du CO₂, en montrant en particulier que le dioxyde de carbone est beaucoup plus soluble dans l'eau que le monoxyde de carbone, ce qui présente l'eau comme un vecteur de choix pour le traitement des déchets carbonés et notamment du graphite, dans sa forme oxydée CO₂.

La solubilité du CO et du CO₂ dans l'eau peut alors être utilisée comme donnant une approximation de la quantité de C¹⁴O₂ absorbée finalement dans l'eau, en fin de traitement.

Le CO₂ compressé peut être ensuite minéralisé par des techniques classiques, par exemple en carbonates (typiquement CaCO₃) ou en carbures (par exemple en carbure de silicium SiC), ou recyclé pour être utilisé à des fins industrielles ou sanitaires (pour des examens en hôpitaux par exemple, en tant que révélateur dans l'imagerie médicale).

Dans l'exemple représenté sur la figure 1, il est pris l'option de traiter le carbone 14 dans la forme du dioxyde de carbone CO₂. Dans un premier mode de réalisation, cette solution peut être préférée en effet car des problèmes potentiels de sûreté se posent avec le CO, pouvant générer des coûts et des complexités supplémentaires. En convertissant dès sa sortie du four de grillage (« roaster ») le CO en CO₂, on élimine un problème majeur lié à un risque potentiel de sûreté, d'explosion, d'empoisonnement et de radio-toxicité du CO gazeux. La présence de CO en gaz nécessite un grand nombre de contrôles augmentant le coût de traitement. Le gaz en sortie du traitement illustré sur la figure 1 comporte ainsi, à plus de 90 %, du CO₂ pur, lequel peut être fait réagir pour former un carbonate ou un autre produit avec une simple réaction chimique sans coût excessif.

D'un autre coté, garder du monoxyde de carbone CO peut être avantageux s'il est choisi de mettre en oeuvre un conditionnement solide en SiC (carbure de silicium) ou en noir de charbon, par exemple, dans la mesure où le SiC prend moins de place de stockage que le CaCO₃.

On comprendra ainsi que le choix de traiter du CO ou du CO₂ en fin de décontamination peut dépendre d'une optimisation entre :
- la sûreté de traitement du CO₂ comparé à celui du CO,
- la facilité de produire un composé stable acceptable pour le stockage, à partir du CO ou à partir du CO₂,
- le volume du produit final (carbure de silicium d'une part, ou carbonates d'autre part).

Bien entendu, la présente invention ne se limite pas aux formes de réalisation décrites ci-avant à titre d'exemples ; elle s'étend à d'autres variantes.

Par exemple, on a décrit ci-avant un traitement de déchets carbonés comportant du graphite. Toutefois, l'invention pourrait s'appliquer globalement de la même manière pour traiter d'autres types de déchets carbonés, notamment des résines.

Par ailleurs, on a décrit ci-avant des conteneurs de stockage 5, 13, 16, contenant essentiellement, respectivement, les éléments radioactifs CI36, H3 et C14. Toutefois, bien entendu, une petite quantité de H3 peut être présente dans le réservoir A (référence 5 de la figure 1) ou inversement une certaine quantité de CI36 peut être présente dans le réservoir B (référence 13). Les quantités présentes dépendent notamment des conditions thermiques de séchage (au poste 3) et de grillage (poste 6). Dans un exemple de réalisation, elles sont conformes à l'enseignement des documents FR-2943167 A1 et FR-2997543 A1. Toutefois, on peut prévoir des variantes dans les conditions thermiques de ces traitements sans incidence majeure sur la présente invention.

## Revendications

1. Procédé de traitement de déchets radioactifs carbonés, comportant un acheminement des déchets jusqu'à un ou plusieurs postes de séparation d'isotopes radioactifs, parmi au moins du carbone 14, du chlore 36, et du tritium, l'acheminement étant effectué par voie humide vers chacun des postes,
**caractérisé en ce que** les déchets sont mélangés à de l'eau sous forme de boue, puis filtrés mécaniquement et séchés (3) à une température comprise entre 400 et 600°C, et **en ce que** l'eau issue du séchage comporte tout ou partie du chlore 36 initialement dans les déchets avant séchage.

2. Procédé selon la revendication 1, **caractérisé en ce qu'**on prévoit des postes de séparation spécifiques pour chaque élément parmi le carbone 14, le chlore 36, et le tritium, et un acheminement par voie humide vers chacun desdits postes.

3. Procédé selon l'une des revendications précédentes, **caractérisé en ce que** les déchets sont broyés et acheminés en étant mélangés à de l'eau sous forme de boue (B), avant une première séparation isotopique (5).

4. Procédé selon l'une des revendications précédentes, **caractérisé en ce que**, après séparation du chlore 36, les déchets sont calcinés par grillage (6), puis lavés (10), et **en ce que** l'eau récupérée du lavage comporte tout ou partie du tritium (13) initialement dans les déchets avant grillage.

5. Procédé selon l'une des revendications précédentes, **caractérisé en ce que** les séparations du chlore 36 et du tritium précèdent le traitement du carbone 14.

6. Procédé selon l'une des revendications précédentes, **caractérisé en ce que** le chlore 36 et le tritium sont séparés du reste des déchets carbonés par lixiviation.

7. Procédé selon l'une des revendications précédentes, **caractérisé en ce que**, une partie au moins des déchets étant calcinée par grillage, les déchets résultant du grillage sont oxydés sous forme de dioxyde de carbone pour être dissous dans de l'eau d'acheminement.

8. Procédé selon l'une des revendications précédentes, **caractérisé en ce que** le carbone 14 est mis sous forme de dioxyde de carbone pour être traité par réaction de carbonatation, pour solidification et stockage sous forme solide (16).

9. Procédé selon l'une des revendications précédentes, **caractérisé en ce que** les déchets carbonés comportent initialement du graphite.

10. Installation de traitement de déchets radioactifs carbonés comportant un ou plusieurs postes de séparation d'isotopes radioactifs, parmi au moins du carbone 14, du chlore 36, et du tritium, ainsi que des moyens d'acheminement des déchets jusqu'auxdits postes, les moyens d'acheminement étant alimentés en eau, pour un acheminement des déchets par voie humide,
**caractérisé en ce que** les déchets sont mélangés à de l'eau sous forme de boue, puis filtrés mécaniquement et séchés (3) à une température comprise entre 400 et 600°C, l'eau issue du séchage comportant tout ou partie du chlore 36 initialement dans les déchets avant séchage.

## Patentansprüche

1. Verfahren zur Behandlung von kohlenstoffhaltigem radioaktiven Abfall, aufweisend ein Fördern des Abfall zu einer oder mehreren Trennstationen zum Abtrennen von radioaktiven Isotopen, darunter mindestens Kohlenstoff 14, Chlor 36 und Tritium, wobei das Fördern zu jeder der Stationen auf nassem Wege erfolgt,
**dadurch gekennzeichnet, dass** der Abfall mit Wasser in eine Schlammform vermischt wird, dann mechanisch gefiltert und bei einer Temperatur zwischen 400 und 600°C getrocknet wird (3), und dadurch dass das aus der Trocknung stammende Wasser das gesamte oder einen Teil des Chlor 36 enthält, das vor dem Trocknen in dem Abfall ursprünglich vorhanden war.

2. Verfahren nach Anspruch 1, **dadurch gekennzeichnet, dass** für jedes der Elemente Kohlenstoff 14, Chlor 36 und Tritium spezifische Trennstationen und eine Förderung zu jeder der Stationen auf nassem Wege vorgesehen sind.

3. Verfahren nach einem der vorstehenden Ansprüche, **dadurch gekennzeichnet, dass** vor einer ersten Isotopentrennung (5) der Abfall gemahlen und mit Wasser in eine Schlammform (B) vermischt befördert wird.

4. Verfahren nach einem der vorstehenden Ansprüche, **dadurch gekennzeichnet, dass** nach Abtrennung des Chlor 36 der Abfall mittels Rösten verkohlt (6), dann gewaschen (10) wird, und dadurch, dass das aus dem Waschvorgang zurückgewonnene Wasser das gesamte oder einen Teil des Tritium (13) enthält, das vor dem Rösten in dem Abfall ursprünglich vorhanden war.

5. Verfahren nach einem der vorstehenden Ansprüche, **dadurch gekennzeichnet, dass** die Abtrennung des Chlor 36 und des Tritium der Behandlung des Kohlenstoff 14 vorausgehen.

6. Verfahren nach einem der vorstehenden Ansprüche, **dadurch gekennzeichnet, dass** das Chlor 36 und das Tritium mittels Auslaugen vom Rest des kohlenstoffhaltigen Abfalls getrennt werden.

7. Verfahren nach einem der vorstehenden Ansprüche, **dadurch gekennzeichnet, dass**, nachdem mindestens ein Teil des Abfalls mittels Rösten verkohlt worden ist, der aus dem Rösten resultierende Abfall in eine Kohlenstoffdioxidform oxidiert werden, um in dem Förderwasser gelöst zu werden.

8. Verfahren nach einem der vorstehenden Ansprüche, **dadurch gekennzeichnet, dass** der Kohlenstoff 14 in eine Kohlenstoffdioxidform gebracht wird, um mittels einer Karbonatation-Reaktion behandelt zu werden, um ihn zu verfestigen und als Feststoff zu lagern (16).

9. Verfahren nach einem der vorstehenden Ansprüche, **dadurch gekennzeichnet, dass** der kohlenstoffhaltige Abfall ursprünglich Graphit aufweist.

10. Anlage zur Behandlung von kohlenstoffhaltigem radioaktiven Abfall, die eine oder mehrere Trennstationen zum Abtrennen von radioaktiven Isotopen, darunter mindestens Kohlenstoff 14, Chlor 36 und Tritium, aufweist, sowie Förderungseinrichtungen zum Fördern des Abfalls zu den Stationen, wobei für eine Förderung des Abfalls auf nassem Wege die Förderungseinrichtungen mit Wasser gespeist werden,
**dadurch gekennzeichnet, dass** der Abfall mit Wasser in eine Schlammform vermischt wird, dann mechanisch gefiltert und bei einer Temperatur zwischen 400 und 600°C getrocknet wird (3), wobei das aus der Trocknung stammende Wasser das gesamte oder einen Teil des Chlor 36 enthält, das vor dem Trocknen in dem Abfall ursprünglich vorhanden war.

## Claims

1. A method for treating carbonaceous radioactive waste, comprising the delivery of waste to one or more radioactive isotope separation stations, said isotopes being among at least carbon 14, chlorine 36, and tritium, the delivery to each of the stations occurring in wet form,
**Characterized in that** the waste is mixed with water to form a slurry, then mechanically filtered and dried, at a temperature between 400 and 600°C, and **in that** the water issuing from this drying contains all or part of the chlorine 36 initially present in the waste prior to drying.

2. The method according to claim 1, wherein specific separation stations are provided for each element among the carbon 14, chlorine 36, and tritium, as well as delivery in wet form to each of said stations.

3. The method according to claim 1, wherein the waste is crushed and mixed with water for delivery in slurry form, before a first isotopic separation.

4. The method according to claim 1, wherein, after separating the chlorine 36, the waste is calcined by roasting, then washed, and wherein the water recovered from the wash contains all or part of the tritium initially present in the waste prior to roasting.

5. The method according to claim 1, wherein the separations of the chlorine 36 and the tritium precede the treatment of the carbon 14.

6. The method according to claim 1, wherein the chlorine 36 and the tritium are separated from the rest of the carbonaceous waste by leaching.

7. The method according to claim 1, wherein, with at least a portion of the waste being calcined by roasting, the waste resulting from the roasting is oxidized to carbon dioxide form for dissolution in the conveying water.

8. The method according to claim 1, wherein the carbon 14 is put in carbon dioxide form for treatment by carbonation reaction, in order to be solidified and stored in solid form.

9. The method according to claim 1, wherein the carbonaceous waste initially contains graphite.

10. An installation for treating carbonaceous radioactive waste, comprising one or more radioactive isotope separation stations, said isotopes being among at least carbon 14, chlorine 36, and tritium, as well as means of delivering the waste to said stations,
the means of delivery being supplied with water in order to deliver the waste in wet form.
